# EUROPEAN PATENT APPLICATION

(11) **EP 4 435 410 A1**
(43) Date of publication of application: **25.09.2024**
(21) Application number: 23163380.1
(22) Date of filing: 22.03.2023
(51) Int. Cl.: G01N 21/76, G01N 21/25

(54) **AN INTEGRATED METHOD OF EXTRACTION AND DETECTION OF NUCLEIC ACID MOLECULES ON AN AUTOMATED IMMUNOASSAY PLATFORM**

(71) Applicant: Siemens Healthineers AG, 91301 Forchheim (DE)
(72) Inventor: Huang, Yiwei, 91058 Erlangen (DE); Paulicka, Peter, 91301 Forchheim (DE)
(74) Representative: Siemens Healthineers Patent Attorneys

(57) **Abstract**

The present invention relates to a multiplexing detection device comprising an optical filter, a high sensitivity optical detector, a collimating lens, a terminal mirror, a cuvette holder designed to hold a cuvette, wherein said cuvette is a reaction vessel for a non-excited chemiluminescence reaction emitting photons which are collected, transmitted through the optical filter and detected by the high sensitivity optical detector; and a synchronization module, which is designed to synchronize the operation of the optical detector and initiation of the chemiluminescence reaction. Also provided is a corresponding method for detecting a molecular interaction between at least one target molecule and an interactor molecule, the use of the device for a multiplex detection of a molecular interaction and a system for multiplex detection.

## Description

### TECHNICAL FIELD

The present invention relates to a multiplexing detection device comprising an optical filter, a high sensitivity optical detector, a collimating lens, a terminal mirror, a cuvette holder designed to hold a cuvette, wherein said cuvette is a reaction vessel for a non-excited chemiluminescence reaction emitting photons which are collected, transmitted through the optical filter and detected by the high sensitivity optical detector; and a synchronization module, which is designed to synchronize the operation of the optical detector and initiation of the chemiluminescence reaction. Also provided is a corresponding method for detecting a molecular interaction between at least one target molecule and an interactor molecule, the use of the device for a multiplex detection of a molecular interaction and a system for multiplex detection.

### BACKGROUND

The field of molecular diagnostics has become increasingly important in clinical laboratories, in particular since the COVID-19 pandemic. Various molecular diagnostic tests and assay are used in modern clinical applications, e.g., in the context of infectious diseases, oncological examinations, coagulation tests, pharmacogenetics, or the assessment of genetic disorders (Williams et al., 2018, Molecular Pathology, 691-707; Alamri et al., 2022, Current Issues in Molecular Biology, 44, 4769-4789). Molecular diagnostic testing is, inter alia, utilized to detect specific DNA or RNA sequences which are directly or indirectly associated with a disease, including single nucleotide polymorphisms (SNPs), deletions and insertions. Current techniques for detection or quantification of specific nucleic acid sequences include heterogeneous hybridization assays, PCR or isothermal amplification methods or direct sequencing. Of elevated significance are also aptamer-based diagnostics which include the binding of peptide sequences to DNA or RNA molecules or proteins of interest (Chen et al., 2020, Virol Sin., 35(3), 351-354). In particular, the use of biosensors as robust, cost-effective and simple technology has been proposed for the detection of various biomolecules including pathogens, proteins or glucose (Hoyos-Nogués et al., 2018, Molecules, 23, 1683).

However, these assay formats are typically time consuming and thus difficult to use in critical medical situations. Moreover, many of the current tests are not suitable for immunoassay analyzers, which are currently the most prominent fully automated platforms in the clinical laboratory or in point-of-care settings e.g., emergency rooms.

There is thus a need for improved, effective and rapid means and methods for molecular diagnostics.

### SUMMARY

The present invention addresses these needs and provides in a first aspect a multiplexing detection device comprising an optical filter, a high sensitivity optical detector, a collimating lens, a terminal mirror, a cuvette holder designed to hold a cuvette, wherein said cuvette is a reaction vessel for a non-excited chemiluminescence reaction emitting photons which are collected, transmitted through the optical filter and detected by the high sensitivity optical detector; and a synchronization module, which is designed to synchronize the operation of the optical detector and initiation of the chemiluminescence reaction. The device advantageously allows to perform an ultra-rapid multiplexing detection of specific target molecules, e.g., nucleic acids. Further the use of the device and the corresponding method reduce the time to result, decrease the consumption of reagents due to multiplexing in a single cuvette and allow, in several cases a comparison of concentration of different analytes within a single sample or cuvette.

In a preferred embodiment of the detection device the optical filters are arranged in a filter wheel. It is particularly preferred that the filter wheel comprises 2 to 6 optical filters, which are arranged in a circular or semicircular manner in the wheel.

In a further preferred embodiment, the filter wheel rotates in the device with a velocity of 30 to 50 ms per revolution. It is further particularly preferred a rotation velocity of 33 ms or 48 ms per revolution.

In yet another preferred embodiment the optical filters have a transmission wavelength of 400 nm to 700 nm. Particularly preferred are wavelengths of 425 nm, 475 nm, 525 nm, 625 nm or 700 nm.

In a further preferred embodiment of the present invention, the cuvette holder is a carousel holder accommodating 1 to 15 cuvettes.

The present invention further envisages, in a preferred embodiment, that the high sensitivity optical detector is a photomultiplier tube (PMT) or a single-photon avalanche diodes (SPAD), preferably an array of SPADs.

It is particularly preferred that the optical filters are arranged on the surface of the SPAD. In a specific embodiment the arrangement of the optical filters comprises 2 to 6 optical filters, which are arranged in a circular or quadratic manner.

In another preferred embodiment, of the device according to the present invention the device additionally comprises a precision pump which translocates to the cuvette a starting solution which initiates the chemiluminescence reaction emitting photons.

In a further preferred embodiment, the synchronization module synchronizes the operation of the precision pump and data acquisition by the high sensitivity optical detector.

In a further aspect the present invention relates to a method for detecting a molecular interaction between at least one target molecule and an interactor molecule comprising the steps: (i) providing the target molecule in an aqueous solution; (ii) interacting the target molecule with at least one first interactor molecule, wherein the interaction yields a complex comprising both the target molecule and the first interactor; (iii) identifying the complex of step (ii) with a second interactor linked to a chemiluminescent dye, wherein the identification results in a chemiluminescent emission of photons; and (iv) detecting the emission of photons with the device as described herein.

It is preferred that the target molecule is a nucleic acid, a protein or a small organic molecule.

In a further preferred embodiment, the interactor is a hybridizing nucleic acid; a binding protein, preferably an antibody; or a small organic molecule.

In yet another preferred embodiment the method additionally comprises a step of retaining the complex of step (ii) via a further interaction with a third interactor which is present at a substrate, preferably as a biotin-streptavidin interaction; or wherein the first interactor is immobilized at a substrate ab initio.

In yet another preferred embodiment steps (ii) and (iii) are performed simultaneously or sequentially, optionally followed by a washing and/or incubation step.

According to further preferred embodiments, the chemiluminescent dye is an acridinium ester, preferably NSP-DMAE, HQYAE, TSPAE, NSP-LEZAE, Rhodamine-2-AM-DMAE or CNF-2-AM-DMAE. It is particularly preferred that the method is performed as multiplex detection using at least 3 acridinium esters, wherein the acridinium ester is, in specific embodiments, selected from NSP-DMAE, HQYAE, TSPAE, NSP-LEZAE, Rhodamine-2-AM-DMAE or CNF-2-AM-DMAE.

In a further preferred embodiment, the target molecule is one or more different miRNA molecules, the first interactor is one or more corresponding hybridizing biotinylated DNA catcher molecules, the second interactor is one or more acridinium ester-labeled complex-specific antibodies and the third interactor is a streptavidin coupled to a substrate, wherein for each target molecule of interest a corresponding hybridizing first interactor and a corresponding complex-specific antibody coupled to a different acridinium ester is used.

In yet another further preferred embodiment, the target molecule the target molecule is one or more different miRNA molecules, the first interactor is one or more corresponding hybridizing DNA catcher molecules linked to an acridinium ester, and the second interactor is one or more complex-specific antibodies, wherein for each target molecule of interest a corresponding hybridizing first interactor and a corresponding complex-specific antibody coupled to a different acridinium ester is used.

In another aspect the present invention relates to the use of the device as described herein for a multiplex detection of a molecular interaction between at least one target molecule and an interactor molecule.

In yet another aspect the present invention relates to a system for multiplex detection of a molecular interaction between at least one target molecule and an interactor molecule comprising the detection device as described herein and a cuvette, wherein the cuvette comprises all ingredients required for the performance of the method according to the invention.

### BRIEF DESCRIPTION OF THE DRAWINGS

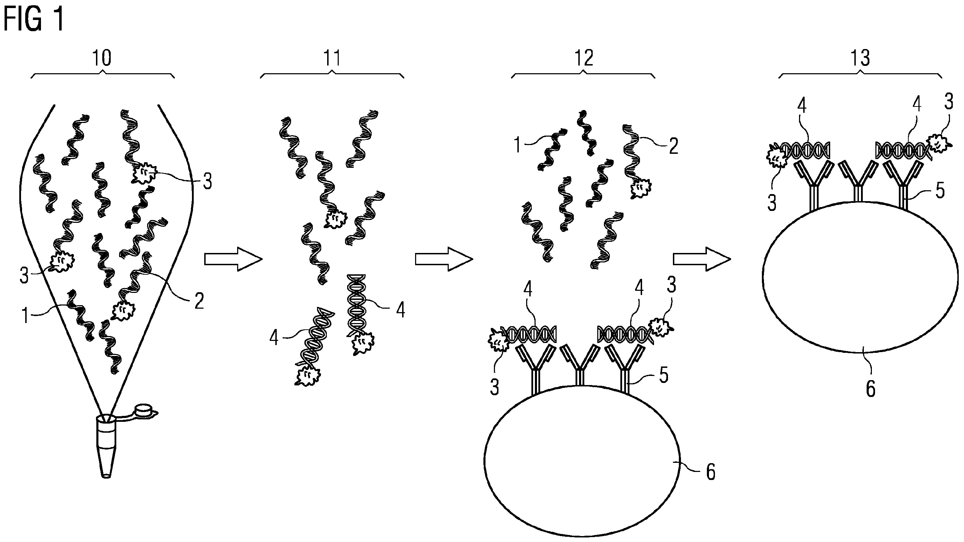

FIG. 1 shows a schematic illustration of an embodiment of the invention. On the left-hand side, a mixture of nucleic acids including miRNA (1) and catcher DNA (3) molecules is shown, which is incubated (10). The catcher DNA (3) molecules comprise a chemiluminescent tag (4). Subsequently a hybridization step (11) is performed yielding DNA/RNA heterohybrid molecules (4). In a next step the DNA/RNA heterohybrid molecules (4) comprising a luminescent tag (3) are captured by specific antibodies, which only bind to perfectly matched heterohybrids, on a bead (6), whereas not bound miRNA (1) and DNA (3) molecules are removed by washing (12). Finally, the bound double-stranded molecules (4) are detected (13).

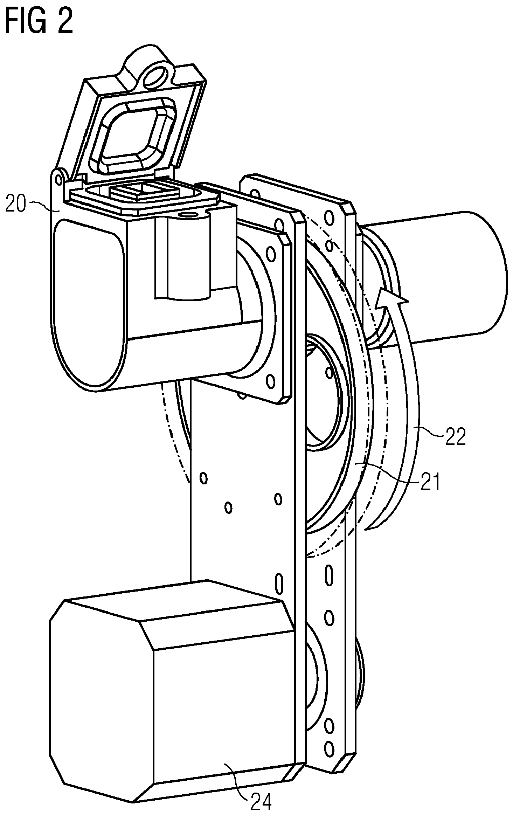

FIG. 2 shows a further schematic illustration of an embodiment of the present invention. The figure depicts a part of a detection device according to the present invention comprising a cuvette holder (20), a filter wheel (21), an arrow (22) indicating the wheel's movement and a stepper motor (24).

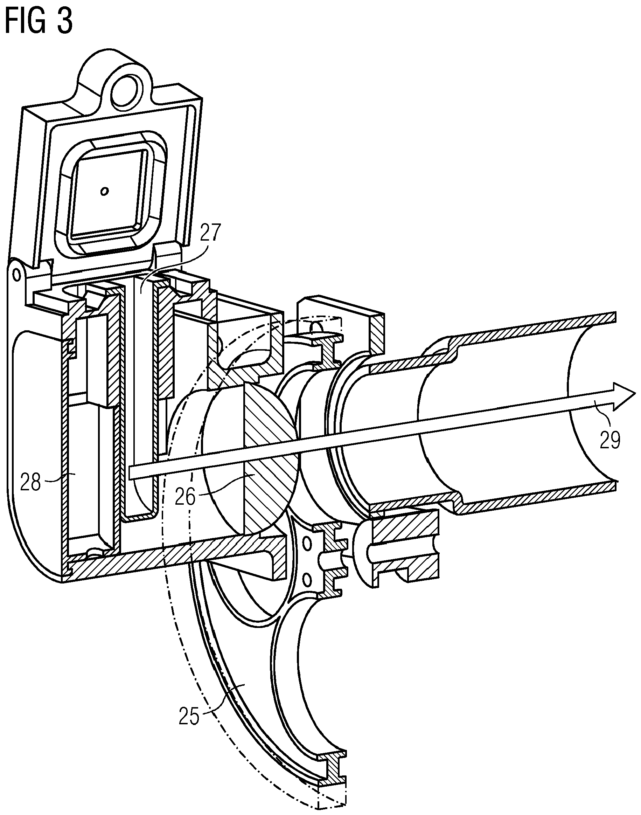

FIG. 3 shows a further schematic illustration of an embodiment of the present invention. The figure depicts a further part of a detection device according to the present invention comprising a cuvette (27), a reflector (28), a collimating lens (26) and portion of a filter wheel (25). An arrow (29) indicates the optical pathway to the optical detector.

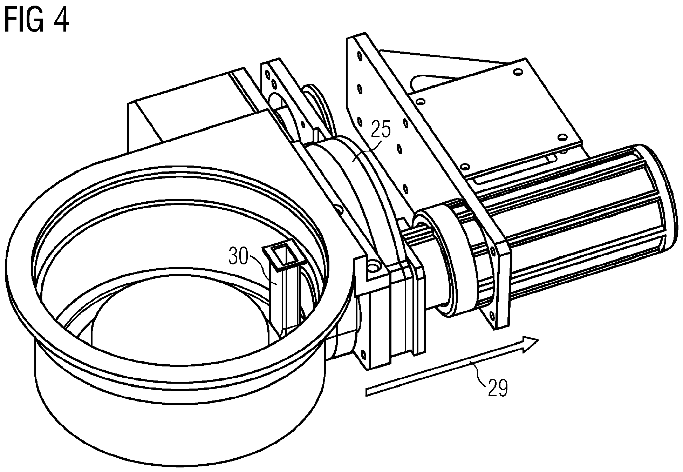

FIG. 4 shows another schematic illustration of an embodiment of the present invention. The figure depicts a further part of a detection device according to the present invention comprising a cuvette (30) in a cuvette carousel and a filter wheel (25), a reflector (28), a collimating lens (26) and portion of a filter wheel (25). An arrow (29) indicates the optical pathway to the optical detector.

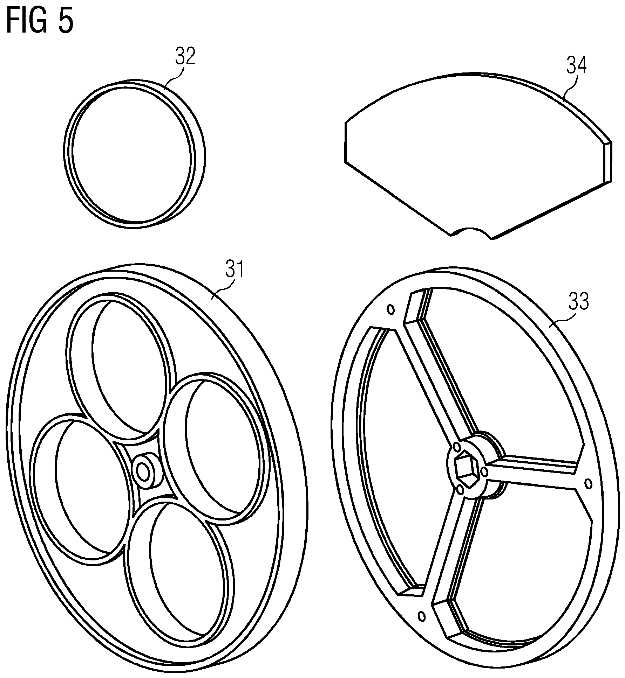

FIG. 5 shows further schematic illustrations of embodiments of the present invention. The figure depicts different forms of filter wheels (31, 33), which comprise round filter types (32) or filters which have the form of a segment of a circle (33) .

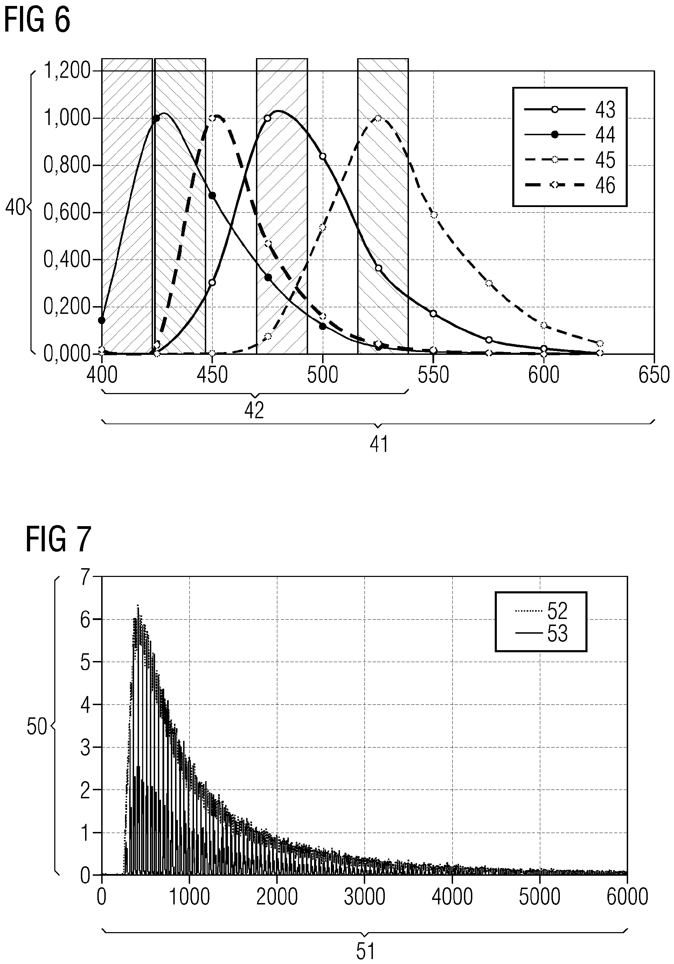

FIG. 6 shows experimental results obtained in the context of the present invention, in particular responses of different acridinium esters in a filter wheel setup. In the vertical axis (40) normalized intensity and in the horizontal axis (41) the wavelength in nm is indicated. The figure shows results of four different acridinium ester analogs (43, 44, 45, 46) and the best choice for corresponding optical filters with indication of corresponding wavelengths (42).
FIG. 7 shows further experimental results obtained in the context of the present invention, in particular a comparison between single and multi-wavelength measurements. In the vertical axis (50) signals are indicated as counts per 10 µs and in the horizontal axis (51) the time is indicated in ms. The figure shows signals with a single filter at 475 nm (52; thick upper line of diagram) and signals obtained with a filter wheel (53; area below the thick upper line of diagram).

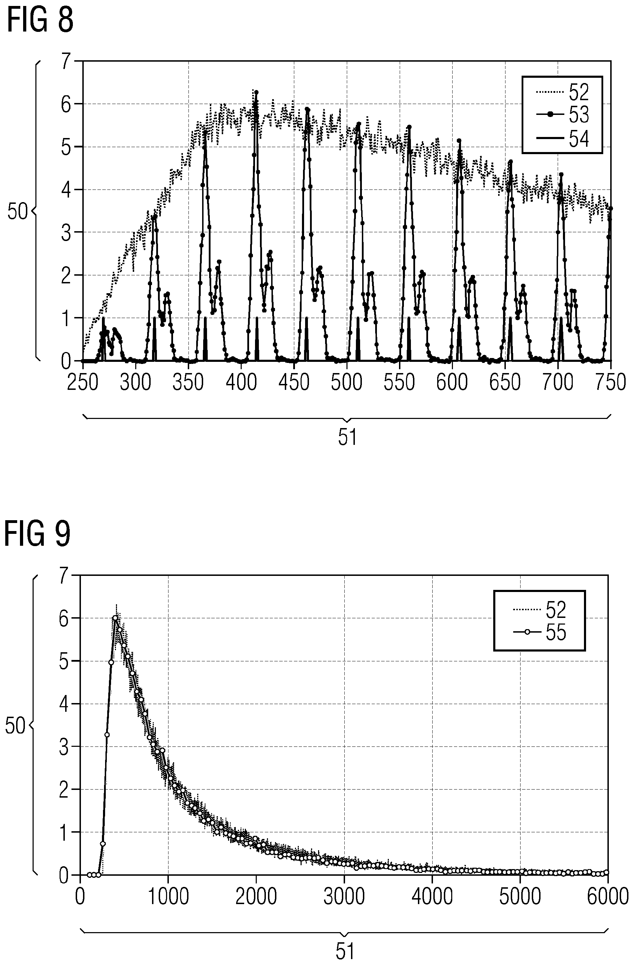

FIG. 8 shows further experimental results obtained in the context of the present invention, in particular a comparison between single and multi-wavelength measurements. In the vertical axis (50) signals are indicated as counts per 10 µs and in the horizontal axis (51) the time is indicated in ms. The figure shows signals with a single filter at 475 nm (52; dotted upper line of diagram) and signals obtained with a filter wheel (53; lined with nodes). Also indicated is a wheel synchronization pulse (54; small peaks on ground line).
FIG. 9 shows further experimental results obtained in the context of the present invention, in particular a comparison of a real single wavelength signal and a resampled PMT signal. In the vertical axis (50) signals are indicated as counts per 10 µs and in the horizontal axis (51) the time is indicated in ms. The figure shows signals with a single filter at 475 nm (52; dotted line of diagram) and a reconstructed signal (53).

### DETAILED DESCRIPTION OF EMBODIMENTS

Although the present invention will be described with respect to particular embodiments, this description is not to be construed in a limiting sense.

Before describing in detail exemplary embodiments of the present invention, definitions important for understanding the present invention are given.

As used in this specification and in the appended claims, the singular forms of "a" and "an" also include the respective plurals unless the context clearly dictates otherwise.

In the context of the present invention, the terms "about" and "approximately" denote an interval of accuracy that a person skilled in the art will understand to still ensure the technical effect of the feature in question. The term typically indicates a deviation from the indicated numerical value of ±20 %, preferably ±15 %, more preferably ±10 %, and even more preferably ±5 %.

It is to be understood that the term "comprising" is not limiting. For the purposes of the present invention the term "consisting of" or "essentially consisting of" is considered to be a preferred embodiment of the term "comprising of". If hereinafter a group is defined to comprise at least a certain number of embodiments, this is meant to also encompass a group which preferably consists of these embodiments only.

Furthermore, the terms " (i) ", "(ii)", "(iii)" or " (a) ", "(b)", "(c)", "(d)", or "first", "second", "third" etc. and the like in the description or in the claims, are used for distinguishing between similar or structural elements and not necessarily for describing a sequential or chronological order.

It is to be understood that the terms so used are interchangeable under appropriate circumstances and that the embodiments of the invention described herein are capable of operation in other sequences than described or illustrated herein. In case the terms relate to steps of a method, procedure or use there is no time or time interval coherence between the steps, i.e., the steps may be carried out simultaneously or there may be time intervals of seconds, minutes, hours, days, weeks etc. between such steps, unless otherwise indicated.

It is to be understood that this invention is not limited to the particular methodology, protocols etc. described herein as these may vary. It is also to be understood that the terminology used herein is for the purpose of describing particular embodiments only and is not intended to limit the scope of the present invention that will be limited only by the appended claims.

The drawings are to be regarded as being schematic representations and elements illustrated in the drawings are not necessarily shown to scale. Rather, the various elements are represented such that their function and general purpose become apparent to a person skilled in the art.

Unless defined otherwise, all technical and scientific terms used herein have the same meanings as commonly understood by one of ordinary skill in the art.

Independent of the grammatical term usage, individuals with male, female or other gender identities are included within the term.

As has been set out above, the present invention concerns in one aspect a multiplexing detection device comprising an optical filter, a high sensitivity optical detector, a collimating lens, a terminal mirror, a cuvette holder designed to hold a cuvette, wherein said cuvette is a reaction vessel for a non-excited chemiluminescence reaction emitting photons which are collected, transmitted through the optical filter and detected by the high sensitivity optical detector; and a synchronization module, which is designed to synchronize the operation of the optical detector and initiation of the chemiluminescence reaction.

The term "multiplexing detection device" as used herein refers to function of the device being capable of detecting signals in a multiplexing or parallel fashion. The device is, in particular, designed to detect optical signals of different wavelengths in parallel. Any suitable number of parallel detections can be detected. The number essentially depends on the available chemiluminescent reagents, in particular the wavelength of their photon emissions, the discriminability of these wavelengths with suitable optical detectors and synchronization of parallel detection. In preferred embodiments 2 to 15, more preferably 2 to 6 parallel detections are performed. In the most preferred embodiment 4 detections are performed in parallel.

The device comprises an optical filter. The "optical filter" is understood in the context of the present invention as optical device which selectively transmits light of different wavelengths. It is typically implemented as glass plane or plastic device in the optical path, which may be dyed or have interference coatings. The optical properties of filters are described by their frequency response, i.e., the specification how the magnitude and phase of each frequency component of an incoming signal is modified by the filter.

According to specific embodiments, the filters have a transmission wavelength of about 400 nm to 700 nm. It is preferred that the filters have a transmission wavelength preferably a wavelength of 425 nm, 475 nm, 525 nm, 625 nm or 700 nm. In further specific embodiments, the filter width may have any suitable value. It is preferred that the filter width is between 1 to 20 nm, preferably 20 nm or below 5 nm.

According to certain embodiments, the optical filters may be bandpass filters. Preferably they have a FWHM of about 25 nm. In further embodiments, a short pass filter may be used, e.g., for wavelengths of 400 nm and below, or a long pass filter may be used for wavelengths of 700nm and above.

The present invention envisages, in a preferred embodiment, that the filters are arranged in the form of a filter wheel (21, 25, 31, 33; see also Figs. 2, 3 and 5). The filter wheel can be rotated in a suitable direction. It is preferably connected to a is connected to a rotation generating component, e.g., a motor. Preferred is a servo or stepper motor (24).

The filer wheel may comprise a number of filters. The number of filters is typically adapted to the number of different wavelengths, e.g., emitted by chemiluminescent reagents, employed during the multiplex detection. In certain embodiments, a number of 2 to 6 filters is arranged in a filter wheel. Preferably, a number of 2-4 filters, more preferably 3 or 4 filters are arranged in a filter wheel.

The filters within the filter wheel can be arranged in different ways. Preferred is a circular manner, e.g., as depicted in Fig. 5, left hand side (32). Accordingly, round or essentially round filters are arranged around the center of the filter wheel. By rotating the wheel light which passes at a certain position on a radius around the wheel center which corresponds to the centers of the round filters will pass centrally through all filters during rotation.

In alternative embodiments the filters may have the form of a segment of a circle, e.g., as depicted in Fig. 5, right hand side (34). Accordingly, circle segment filters are arranged around the center of the filter wheel. These filters advantageously occupy a large area of the filter wheel and, upon rotation, allow for a longer filtering activity during rotation in comparison to the round filter arrangement. Thus, by rotating the wheel light which passes at a certain position on a radius around the wheel center which corresponds to half diameter of the filter circle segment filters will pass centrally through all filters during rotation.

In additional embodiments, any other suitable form or shape of filter arrangement may be used. For example, a combination of two or more wheels which are placed one beside the other and which are rotated in a synchronized manner may be employed to generate an additional filtering effect. Also, the arrangement in radial wheel form, e.g., also combined with a staggered composition comprising 2 or more wheels in a row, wherein the filter radiuses have different values and where the position of the light path is changed is envisaged.

Further envisaged is the employment of DLP (Digital Light Processing) technology, i.e., of a digital micromirror device, which allows to direct to photons trough different mirrors. Also envisaged is the use of liquid crystal tunable filters and polarization controllers, which have fast and strong tuning and switching capabilities using small voltages and can be miniaturized and combined with miniature optical imaging systems for biomedical applications.

The filter wheel is rotated within the device in order to change the optical filter which is positioned in the optical path coming from a cuvette, in which a non-excited chemiluminescent reaction takes place and generates photons which are emitted, collected, and transmitted through the optical filter. Since the chemiluminescent reaction produces photon emissions at different wavelengths corresponding filters for these wavelengths need to be present. By rotating the filter wheel for the different wavelengths of the chemiluminescent reagents a corresponding number of suitable optical filters is provided. This number can be adapted to the number of chemiluminescent reagents and the wavelengths required as explained herein. The rotation of the wheel thus produces a filtering time for the corresponding wavelength as long as the specific wavelength filter is in the position of the light pathway. Only during this time light with the nominal filter wavelength can pass the filter and arrive at the high sensitivity optical detector. In preferred embodiments the rotation velocity of the wheel is about 30 to 50 ms per revolution, which optimizes the detection of target molecules. It is particularly preferred to rotate the wheel with a velocity of 33 ms or 48 ms per revolution.

The light which is filtered is produced in reaction chamber or vessel, which is suitable for performing chemical reactions, e.g., is capable for enclosing an aqueous solution and optionally comprises substrate which allows for the immobilization of certain ingredients. The reaction chamber or vessel further has to be transparent, i.e., it has to pass the emitted photons form the chemiluminescent reaction. The term "substrate" as used herein refers to a solid phase present at the surface of an entity, which is typically composed of porous and/or non-porous material, usually insoluble in water. The substrate may have various forms such as a vessel, tube, cuvette, microtitration plate, or cartridge etc. Usually, the surface of the solid phase is hydrophilic. The substrate may be composed of various materials such as inorganic materials and/or organic materials, synthetic materials, naturally occurring materials and/or modified naturally occurring materials. Examples of substrate materials include polymers such as cellulose, nitrocellulose, cellulose acetate, polyvinyl chloride, polyacrylamide, cross-linked dextran molecules, agarose, polystyrene, polyethylene, polypropylene, polymethacrylate, or nylon; ceramics; silicate; glass; metals, e.g., noble metals such as gold and silver; or mixtures or combinations thereof. The substrate may, in certain alternative embodiments, be part of a bead or particle, e.g., a magnetic particle such as paramagnetic particle, which can be actuated by suitable magnets.

It is preferred that the vessel is in the form of a cuvette. A "cuvette" as meant to be small tube-like container with straight sides and a circular or square cross-section. It is sealed at one end, and made of a clear, transparent material such as plastic, glass, or fused quartz. Cuvettes may hold any suitable volume, e.g., 10 µl to 5000 µl, such as 10 µl, 20 µl, 30 µl, 40 µl, 50 µl, 70 µl, 100 µl, 200 µl, 500 µl, 2.5 ml, 3 ml, 4 ml, 5 ml or more or any value in between the mentioned values. The cuvette may have any suitable light path; preferably it may have a light path of 10 mm.

It is preferred that the cuvette has two transparent sides opposite one another so that the generated chemiluminescent radiation can pass through at the side of the optical pathway toward the filter, and at the other side it may pass through to a mirror which reflects the light into the direction of the optical pathway.

The cuvette is provided in any suitable cuvette holder, which allows for an easy handling, e.g., entering and removing of the cuvette. Further envisaged are cuvette holders in the form of cuvette carousels, which can accommodate a certain number of cuvettes and move the cuvette to the optical pathway according to a predefined pattern, e.g., one after the other. In preferred embodiments, the carousel comprises space for the accommodation of up to 15, 20, 25 or more cuvettes.

In accordance with the chemiluminescent light generation the device comprises a terminal mirror, which is typically situated at the opposite side of entry point of the optical path, i.e., close to the cuvette holder. The light emission from the cuvette may accordingly be reflected by the mirror and exits the cuvette at the cuvette's opposite side. In specific embodiments, one or more outer walls of the cuvette may have the function of a mirror and thus reflect the generated light.

The mirror is typically a full spectrum mirror, which reflects all impacting wavelengths. The mirror may preferably have a focusing or concentrating function, e.g., in the form of a parabolic mirror. The reflective layer of the mirror is typically a metal such as silver, tin, nickel, or chromium, deposited by a wet process; or aluminum, deposited by sputtering or evaporation in vacuum. The reflective layer may also be made of one or more layers of transparent materials with suitable indices of refraction.

The device further comprises focusing or aligning optical elements which can be designed as curved mirrors, lenses, and/or diaphragms. Preferably one or more collimating lenses are provided in the optical pathway of the light from the cuvette to the optical detector. Particularly preferred is a collimating lens system made up of a tube with one or more lenses. By selecting the right properties of the lens and focal distance, light can be collimated with high accuracy.

The emitted light from the chemiluminescence reaction, after having been collimated and after having passed the optical filter as described herein, is detected by a high sensitivity optical detector. The term "high sensitivity optical detector" as used herein refers to any suitable optical detector which is capable of registering optical radiation, in particular also of weak signals. The optical detector preferably has further a small response time, i.e., it can quickly respond to a variation of the input light intensity. Further, it is preferred that the noise level is marginal. The optical detector, in further preferred embodiments, has a spectral response range which at least covers the wavelengths emitted by the chemiluminescent reagents and/or the wavelengths passing through the optical filters described herein. An optical detector according to the present invention may include a photodiode such as a single-photon avalanche diodes (SPAD), a photoconductor, a junction photodetector, a photomultiplier such as a photomultiplier tube (PMT).

A "photodiode" is a light-sensitive semiconductor diode which that converts light into an electric current at a p-n junction or pin junction through an internal photo effect or offers a lighting-dependent resistance. Accordingly, light is converted into an electrical voltage or an electrical current or to receive information transmitted with light.

Preferred is the use of single-photon avalanche diodes (SPADs). These diodes are typically solid-state photodetectors which are based around a semi-conductor p-n junction that can be illuminated with electromagnetic radiation, inter alia of UV and visible wavelengths. However, in a SPAD, the reverse bias voltage is so high that impact ionization occurs which causes an avalanche current. Thus, a photo-generated carrier is accelerated by the electric field in the device to a kinetic energy which is enough to overcome the ionization energy of the bulk material. A large avalanche of current carriers grows exponentially and can be triggered from as few as a single photon-initiated carrier. A SPAD is able to detect single photons providing short duration trigger pulses that can be counted.

It is particularly preferred that the SPAD is provided as an array of SPADs.

In further preferred embodiments, optical filters as described herein, may be arranged on the surface of the SPADs. For example, if there are 2-6 different optical filters for different wavelengths as described herein, these filters may each comprise at the side of their optical output, i.e., at the opposite side of the light entry said SPAD, e.g., an SPAD array. The arrays may accordingly be arranged in a circular or quadratic manner. These constructs may, in specific embodiments, be provided as part of a filter wheel as described herein, or as separate entities without filter wheel or replacing the filter wheel. The detection would hence be performed directly on the wheel. It is particularly preferred that 2-6 arrays are provided for 2-6 optical filters as described herein. SPADs which are commercially available, for example, from Canon or Hamamatsu may be used.

Alternatively, the high sensitivity optical detector may be a photomultiplier or photomultiplier tube (PMT). The PMT is an extremely sensitive detectors of light in the ultraviolet, visible, and near-infrared ranges of the electromagnetic spectrum. The PMT is a member of the class of vacuum phototubes, which multiply the current produced by incident light by about 10⁸ times in multiple dynode stages, enabling individual photons to be detected when, for example, the incident flux of light is low. Particularly preferred are PMTs of Hamamatsu Photonics R1924A or R3550P-600.

In case a PMT is used, the light from the chemiluminescent reaction may travel through an optical path towards the PMT. This path may preferably be composed of the components of the device as described herein, which are typically mirrored and thus function as light conductor. Alternatively, the path may, for example, be composed of a fiber connection which allows to transmit light lossless.

Further the device may comprise, in certain embodiments, an optical amplifier such as a solid-state amplifier, a doped fiber amplifier, or a semiconductor optical amplifier (SOA).

The device according to the present invention further comprises a synchronization module, which is designed to synchronize the operation of the optical detector and the initiation of the chemiluminescence reaction. The synchronization module may comprise an electronic or computer component, which allows the control and manipulation of activities in the device. The synchronization module may, for example, comprise an integrated semi-conductor circuit which can comprise a processor or controller and which is configured to detect and control the velocity of the filter wheel, the activity of a cuvette carousel, the activity and recording times of the optical detector and the process of initiation of generation of chemiluminescence, i.e., the initiation of the reaction which yields photon emission via chemiluminescence as described herein. For example, the device may comprise a number of sensors which detect activities and send corresponding signals to the synchronization module. The synchronization module receives and processes these signals leading, for example, to output signals which can be transmitted to actuator entities. Thereby, for example, the filter wheel velocity may be adjusted or maintained in order to start detection in correspondence with the wavelength phase of the filter wheel and to coordinate the initiation of the chemiluminescence reaction and the velocity of the filter wheel etc. It is preferred that the filter wheel comprises a hall sensor and a magnet which sot that when the magnet passes, a synchronization pulse is triggered.

In particularly preferred embodiments the device additionally comprises a precision pump. This pump is designed to translocate or transport certain amounts of compounds or compositions between certain points or regions of the device. It is particularly preferred that the precision pump translocates or transports a starting solution which initiates the chemiluminescence reaction emitting photons, as described herein below, to the reaction chamber or vessel where the chemiluminescence reaction takes place, e.g., the cuvette as described herein. This translocation will start the reaction process and subsequently the production of light. In certain embodiments, the starting solution may directly be injected into the device in order to accelerate the mixing of components. By coordinating this activity and the operation of the filter wheel and further of the optical detection an efficient data acquisition by the device, a suitable control and possible countermeasures in case of deviance from pre-defined threshold values, e.g., for the velocity of the filter wheel, the amount of light to arrive at the optical detector etc. are facilitated.

In a further aspect the present invention relates to a method for detecting a molecular interaction between at least one target molecule and an interactor molecule comprising the steps (i) providing the target molecule in an aqueous solution; (ii) interacting the target molecule with at least one first interactor molecule, wherein the interaction yields a complex comprising both the target molecule and the first interactor; (iii) identifying the complex of step (ii) with a second interactor linked to a chemiluminescent dye, wherein the identification results in a chemiluminescent emission of photons; and (iv) detecting the emission of photons with the device as described herein.

The term "target molecule" as used herein relates to any type of chemical or biochemical entity of interest, which is amenable to molecular analysis. The term refers, inter alia, to small organic molecules, to nucleic acids, e.g., RNA or DNA molecules, or peptides or polypeptides. Preferably, the target polynucleotide is a DNA or RNA molecule. In specific embodiments of the present invention the target polynucleotide represents a gene, one or more exons of a gene, an intergenic region, a non-transcribed regulatory region, and/or an open reading frame or a sub-portion thereof, an mRNA molecule, an enhancer RNA, a long non-coding RNA molecule, a miRNA molecule or any other DNA or RNA form known to the skilled person In further embodiments, the target molecule may also be a panel of different genes or transcripts, or a panel of open reading frames or subportions thereof. Particularly preferred is the target molecule miRNA.

The term "interactor molecule" as used herein refers to any chemical or biochemical entity which is capable of interacting with the target molecule. The interaction is preferably a binding, in particular a specific binding. Preferred interactors are nucleic acids, which are capable of hybridizing, i.e. binding, to the target molecule, binding proteins such as antibodies, antibody fragments, lectins and the like, as well as small molecules, which are able to bind, for example, to proteins or peptides. Also envisaged are molecularly imprinted polymers (MIPs), i.e., "smart materials" with potential to replace antibodies in the future. The concept of the MIP technology essentially relies on the formation of a synthetic polymer around a template molecule, which after removal, leaves behind an idealized imprint; cavities within the polymer matrix, which can specifically recognize the template molecule.

In a first step the target molecule is provided in an aqueous solution. The solution may, for example, comprise or be composed of suitable buffers such as a hybridization buffer, e.g., comprising SSC, NaCl, sodium phosphate, SDS, TE and/or MgCl₂, or buffer suitable for immunologic interactions etc. The solution is typically suitable for the performance of interactions between a target molecule and an interactor, e.g., for a hybridization of two nucleic acids or the binding of an antibody. Accordingly, salt concentration, pH and suitable buffer conditions etc. may preferably be adjusted to the envisaged interactions. In further embodiments additional conditions may be observed and suitably adjusted such as temperature of the reaction environment, light exposure, agitation or liquid flow velocity in the reaction mix and the like.

The target molecule may be derived from a sample. The term "sample" as used herein relates to any biological material obtained via suitable methods known to the person skilled in the art from a subject. The sample used in the context of the present invention should preferably be collected in a clinically acceptable manner, more preferably in a way that nucleic acids are preserved. The biological samples may include body tissues and/or fluids, such as blood, or blood components like serum or plasma, sweat, sputum or saliva, semen and urine, as well as feces or stool samples. Furthermore, the biological sample may contain a cell extract derived from or a cell population including an epithelial cell. In certain embodiments cells may be used as primary sources for polynucleotides, polypeptides or small molecules. Accordingly, the cells may be purified from obtained body tissues and fluids if necessary, and then further processed to obtain polynucleotides, polypeptides or small molecules.

In certain embodiments samples, in particular after initial processing, may be pooled. The present invention preferably envisages the use of non-pooled samples. In a specific embodiment of the present invention the content of a biological sample may also be submitted to a specific pre-enrichment step. In further embodiments of the invention, biopsy or resections samples may be obtained and/or used. Such samples may comprise cells or cell lysates. Furthermore, cells may be enriched via filtration processes of fluid or liquid samples, e.g., blood, urine, sweat etc. Such filtration processes may also be combined with pre-enrichment steps based on ligand specific interactions as described herein above.

The provision of the target molecule in an aqueous solution may take place in any suitable environment, e.g., a reaction chamber, a reaction vessel, in a reaction zone in a device such as a microfluidic device or the like. It is preferred that the provision of the target takes place in a cuvette as described herein. The reaction vessel may, in certain embodiments, comprise a substrate which allows for the immobilization of certain ingredients or components, as defined herein.

In a subsequent step of the method an interaction of the target molecule with at least one first interactor molecule is initiated. This initiation takes palace by introducing the target molecule, e.g., in the form of a sample or derived from a sample, into an aqueous solution, or by introducing the interactor into an aqueous solution comprising the target molecule. The interaction leads to the building of a complex between interactor and target molecule. For example, the complex may by a binding complex between an antibody as interactor and its antigen as target molecule. Preferably, the interaction is a hybridization between a target molecule being a nucleic acid and an interactor being a second nucleic acid.

The term "hybridization" as used herein relates to the phenomenon that single-stranded DNA or RNA molecules can anneal to a complementary DNA or RNA. The hybridization may result in DNA-DNA double stranded molecules, or DNA-RNA heterohybrid molecules. In certain embodiments of the present invention the hybridization of target and interactor preferably yield DNA-RNA heterohybrid. The term "complementary" as used herein refers to the presence of matching base pairs in opposite nucleic acid strands. For example, to a nucleotide or base A in a sense strand a complementary or antisense strand binds with a nucleotide or base T, or vice versa; likewise to a nucleotide or base G in a sense strand the complementary or antisense strand binds with a nucleotide or base C, or vice versa. This scheme of complete or perfect complementarity may, in certain embodiments of the invention, be modified by the possibility of the presence of single or multiple non-complementary bases or stretches of nucleotides within the sense and/or antisense strand(s). Thus, to fall within the notion of a pair of sense and antisense strands, both strands may be completely complementary or may be only partially complementary, e.g., show a complementarity of about 80%, 85%, 90%, 91%, 92%, 93%, 94%, 95%, 96%, 97%, 98%, 99%, 99.5%, or 100% between all nucleotides of both strands or, preferably, between all nucleotides in specific segments as defined herein. Non-complementary bases may comprise one of the nucleotides A, T, G, C, i.e., show a mismatch e.g., between A and G, or T and C, or may comprise any modified nucleoside bases including, for example, modified bases as described in WIPO Standard ST.26. Furthermore, the present invention also envisages, in particular, complementarity between non-identical nucleic acid molecules such as a DNA strand and an RNA strand, a DNA strand and a PNA strand, a DNA strand and a CNA strand, etc. It is preferred that the complementarity between strands is a complete or 100% complementarity.

In a further step of the method the complex of the pervious step as mentioned above is identified with a second interactor linked to a chemiluminescent dye. The term "second interactor" as used herein refers to a chemical or biochemical entity, which is capable of a specific interaction with the complex of the first interactor and the target molecule. This specific interaction is preferably a specific binding, which requires a certain degree of complex formation, or the exposure of a certain site or epitope on the target molecule. For example, the second interactor may be a binding protein such as an antibody, which is capable of specifically binding to a complex between the first interactor and the target molecule, or to a specific epitope of the target molecule which is exposed or becomes exposed upon complex formation. It is particularly preferred that the second interactor is an antibody which is capable of specifically binding to a nucleic acid hybrid, more preferably to a DNA-RNA heterohybrid, even more preferably to a DNA-RNA heterohybrid which shows a complementarity of both strands of above 98%, most preferably to a DNA-RNA heterohybrid which shows a complementarity of 100%.

The term "chemiluminescence" as used herein refers to the emission of light, i.e., luminescence, as the result of a chemical reaction. In general, a chemiluminescent reaction can be generated in a direct reaction or indirect reaction, wherein, two reagents, usually a reagent or chemiluminescent dye and an oxidant in the presence of cofactors, react to from a product or intermediate, optionally in the presence of a catalyst. A fraction of the product or intermediate will be formed in an electronically excited state, which can subsequently relax to the ground state with emission of a photon. The reagent is typically a precursor, which is converted into an electronically excited molecule, responsible for light emission. A catalyst enzyme or metal ions may reduce the activation energy and provide an adequate environment for producing high chemiluminescence efficiency out of the process. In certain embodiments cofactors may be used to convert one or more of the reagents into a form capable of reacting and interacting with the catalyst, or to provide an efficient leaving group if bond cleavage is required to produce the excited emitter. Chemiluminescence in aqueous environment is typically caused by redox reactions.

The term "chemiluminescent dye" as used herein refer to an agent which, upon a chemical reaction, emits electromagnetic radiation in the ultraviolet or visible light range. Examples of chemiluminescent dyes include luminol, imidazole, or acridinium esters. Particularly preferred is the use of acridinium esters. Acridinium ester or AE are currently the most commonly used direct chemiluminescent dyes since they advantageously show high stability, low background, high signal-noise ratio, quick light-emitting and a high luminous efficiency. Typically, AE independently emits light in the presence of H₂O₂ and NaOH without the participation of an enzyme and reaches its maximum chemiluminescence in about 0.4 seconds. Thus, exposing the AE to an alkaline H₂O₂ solution typically triggers a flash. Before the flash occurs, the acridone, which is the light emitting species, separates from the remainder of the conjugate, so the subsequent light emission is not influenced by further components. It is preferred that the trigger solution comprises a detergent, which improves the reaction speed. Particularly preferred is the detergent ARQUAD 16-50.

Preferred is the use of chemiluminescent dyes which emit light in different wavelengths, preferably in the range of 400 to 430 nm, e.g., at 425 nm; 450 to 500 nm, e.g., 475 nm, 500 to 550 nm, e.g., 525 nm; 600 to 650 nm, e.g., 625 nm or 675 to 725 nm, e.g., 700 nm. Preferred is the employment of acridinium ester chemiluminescent dyes such as DMAE, NSP-DMAE, HEGAE, HQYAE, ZAE, TSPAE, NSP-LEZAE, Rhodamine-2-AM-DMAE or CNF-2-AM-DMAE, or analogues thereof. Particularly preferred is the use of NSP-DMAE, HQYAE, TSPAE, NSP-LEZAE, Rhodamine-2-AM-DMAE or CNF-2-AM-DMAE. NSP-DMAE is a chemiluminescent dye which emits light with a peak wavelength of 427 nm. TSPAE is a chemiluminescent dye which emits light with a peak wavelength of 480 nm. HQYAE is a chemiluminescent dye which emits light with a peak wavelength of 480 nm. NSP-LEZAE is a chemiluminescent dye which emits light with a peak wavelength of 522 nm. Rhodamine-2-AM-DMAE is a chemiluminescent dye which emits light with a peak wavelength of 620 nm. CNF-2-AM-DMAE is a chemiluminescent dye which emits light with a peak wavelength of 718 nm. Also envisaged are analogues of said AEs or other chemiluminescent dyes, including future developments of these or similar dyes.

The second interactor, e.g., an antibody, may accordingly be linked to a chemiluminescent dye as described herein. Upon binding of the second interactor to the target a chemiluminescent reaction, e.g., by the addition of a trigger solution comprising, for example, H₂O₂ and NaOH, is initiated which detects the complex of target and first interactor. This results in an emission of photons, e.g., of a different wavelength according to the AE type used, which can be detected by a high sensitivity optical detector, preferably high sensitivity optical detector being part of the device according to the present invention.

In the context of the device of the present invention, said initiation of the chemiluminescence reaction may preferably occur in a cuvette as described herein. It is further preferred, that the addition of a trigger solution comprising, for example, H₂O₂ and NaOH, is synchronized by a synchronization module as described herein. It is particularly preferred that the synchronization module synchronizes the operation of the precision pump, which transport said trigger solution to the cuvette in which the chemiluminescence reaction takes place.

The present invention envisages several variants and specific embodiments based on the above outlined general principles. For example, in a set of preferred embodiments the first interactor, e.g., an antibody, is immobilized at a substrate, e.g., at the inner surface of the cuvette as described herein, or on a bead such as a magnetic bead. For example, the first interactor may be immobilized to said substrate, e.g., via a streptavidin-biotin linkage. The complex formation with the target molecule may accordingly take place at the substrate, followed by an interaction with the second interactor, e.g., a further antibody which is also specific for the target molecule, preferably at a different epitope, which is preferably linked to a chemiluminescent dye.

In another, alternative embodiment, the first interactor, e.g., a nucleic acid, is immobilizable to a substrate due to the presence of a binding unit, e.g., a biotin unit fused it, e.g., to a nucleic acid or to a binding protein such as an antibody. Upon formation of a complex with the target molecule, e.g., by forming a DNA-DNA or DNA-RNA duplex, or by forming a complex of an antibody binding to target molecule a second interactor, comprising a chemiluminescence dye, is added, which interacts with the complex. This complex may be brought to the substrate, i.e., be immobilized via an interaction with a third interactor which is present at the substrate. Such a third interactor may preferably be or comprise a streptavidin unit, which allows for an interaction with the biotin present at the first interactor and can produce light upon activation as described herein. Upon triggering the chemiluminescence reaction the presence and/or amount of the target molecule can be detected. In further variant embodiments the first interactor and the third interactor may be connected ab initio, i.e., the first interactor may be bound via its binding unit, e.g., biotin, to the third interactor, e.g., streptavidin, prior to the interaction with the target molecule.

In embodiments, in which an immobilization of an interactor is envisaged, the immobilizing interactions are preferably followed by a washing step which removes excess interactors or and other components which are not part of the complex to be detected.

In yet another specific alternative embodiment, instead of the second interactor the first interactor, e.g., a nucleic acid molecule such as a DNA molecule, may be linked to a chemiluminescent dye. The interaction of the target molecule, e.g., an RNA molecule, and the first interactor may accordingly lead to a complex comprising the chemiluminescence dye. This complex may subsequently be identified, i.e., bound by a second interactor, e.g., an antibody. It is particularly preferred that said second interactor is immobilized at a substrate, e.g., at the inner surface of the cuvette as described herein, or on the surface of a bead, e.g., a magnetic bead. Upon a washing step which removes unbound molecules, a chemiluminescence reaction may be initiated as described herein. Upon triggering the chemiluminescence reaction the presence and/or amount of the target molecule can be detected.

In a particularly preferred embodiment of the invention, the target molecule is an RNA molecule, e.g., a miRNA molecule, the first interactor is a corresponding hybridizing biotinylated DNA catcher molecule, the second interactor is an acridinium ester-labeled complex-specific antibody and the third interactor is a streptavidin coupled to a substrate. Upon a washing step which removes unbound molecules, a chemiluminescence reaction may be initiated as described herein. Upon triggering the chemiluminescence reaction the presence and/or amount of the target molecule can be detected.

The term "complex-specific antibody" as used herein refers to an antibody which is specific for the complex generated by the interaction of the target molecule and the first interactor. This complex may, in certain embodiments, have a specific form, which is recognized by said antibody. In other embodiments, the complex-specific antibody binds to an epitope or sector of the target molecule which is or becomes accessible after the complexation with the first interactor.

In yet another particularly preferred embodiment the target molecule is an RNA molecule, e.g., a miRNA molecule, the first interactor is a corresponding hybridizing DNA catcher molecule linked to an acridinium ester and the second interactor is a complex-specific antibody. Upon a washing step which removes unbound molecules, a chemiluminescence reaction may be initiated as described herein. Upon triggering the chemiluminescence reaction the presence and/or amount of the target molecule can be detected.

In certain embodiments of the invention the method is performed as multiplex detection. The multiplex approach is preferably based on the use of at least two, preferably at least three acridinium ester chemiluminescence dyes emitting light of a different wavelength, which can be linked to different interactors and thus provide differential optical signals according to the specific target molecule identified. The different AE dyes are preferably present within one reaction zone, e.g. within one cuvette as described herein. The dyes are preferably selected from NSP-DMAE, HQYAE, TSPAE, NSP-LEZAE, Rhodamine-2-AM-DMAE or CNF-2-AM-DMAE, which emit radiation at different wavelengths as described herein.

In a corresponding particularly preferred embodiment of the multiplex approach of the invention the target molecule is one or two or more, e.g. 2, 3 or 4 different miRNA molecules, the first interactor is one or two or more 2, 3 or 4 corresponding hybridizing biotinylated DNA catcher molecules, the second interactor are one or two or more, e.g. 2, 3 or 4 corresponding acridinium ester-labeled complex-specific antibodies and the third interactor is a streptavidin coupled to a substrate. Upon a washing step which removes unbound molecules, a chemiluminescence reaction may be initiated as described herein. Upon triggering the chemiluminescence reaction the presence and/or amount of the target molecule can be detected. In the context of this embodiment, it is preferred that for each target molecule of interest a corresponding hybridizing first interactor and a corresponding complex-specific antibody coupled to a different acridinium ester is used. This allows to distinguish the target molecules according to the different wavelengths of the acridinium esters such as NSP-DMAE, HQYAE, TSPAE, NSP-LEZAE, Rhodamine-2-AM-DMAE or CNF-2-AM-DMAE. Accordingly, the device according to the present invention is capable of detecting the multiplexed wavelength emissions with the help of the filter wheel as described herein and the corresponding high sensitivity optical detector.

In another corresponding particularly preferred embodiment of the multiplex approach of the invention the target molecule is one or two or more, e.g., 2, 3 or 4 different miRNA molecules, the first interactor is one or two or more, e.g., 2, 3 or 4 corresponding hybridizing DNA catcher molecules linked to an acridinium ester, the second interactor is one or two or more, e.g., 2, 3 or 4 corresponding complex-specific antibodies. Upon a washing step which removes unbound molecules, a chemiluminescence reaction may be initiated as described herein. Upon a washing step which removes unbound molecules, a chemiluminescence reaction may be initiated as described herein. Upon triggering the chemiluminescence reaction the presence and/or amount of the target molecule can be detected. In the context of this embodiment, it is preferred that for each target molecule of interest a corresponding hybridizing first interactor and a corresponding complex-specific antibody coupled to a different acridinium ester is used. This allows to distinguish the target molecules according to the different wavelengths of the acridinium esters such as NSP-DMAE, HQYAE, TSPAE, NSP-LEZAE, Rhodamine-2-AM-DMAE or CNF-2-AM-DMAE. Accordingly, the device according to the present invention is capable of detecting the multiplexed wavelength emissions with the help of the filter wheel as described herein and the corresponding high sensitivity optical detector.

In specific embodiments, the present invention relates to the performance of the method on a diagnostic platform, e.g., an ADVIA Centaur platform as developed by Siemens Healthineers.

It is further specifically envisaged that the second interactor is a monoclonal antibody which specifically binds DNA/RNA heterohybrids without bias towards a specific sequence. It is further preferred that the antibody binds only to perfectly matched heterohybrids and does not bind to mismatched heterohybrids. The amount of antibody bound will therefore be proportional to the amount of perfectly matched heterohybrids present in the reaction, which again is proportional to the amount of that specific miRNA species present in the blood sample.

Accordingly, the method using said monoclonal antibody which specifically binds DNA/RNA heterohybrids without bias towards a specific sequence may be performed with one or more suitable antibodies, e.g., with one antibody species only.

In a further aspect the present invention relates to the use of the device according to the present invention for a multiplex detection of a molecular interaction between at least one target molecule and an interactor molecule, e.g., as described herein above.

In yet another aspect the present invention relates to a system for multiplex detection of a molecular interaction between at least one target molecule and an interactor molecule, e.g., as described herein, comprising the detection device according to the present invention and a cuvette as described herein. The cuvette comprises preferably all ingredients required for the performance of the method according to the present invention, e.g., streptavidin interactor or immobilized interactors at a surface. The triggering solution for the chemiluminescence may be provided in the device via the precision pump as described herein to the cuvette.

### EXAMPLES

### EXAMPLE 1

### Multiplexing ELF Assay Development

The following ingredients were used: Mouse monoclonal anti-PIIINP antibody labeled with acridinium ester (NSP-DMAE) (~1.0 pg/mL), mouse monoclonal anti-TIMP-1 labeled with acridinium ester (NSP-LEZAE) (~0.1 pg/mL) in buffer. Also required is an ancillary reagent such as Mouse monoclonal anti-PIIINP antibody labeled with biotin (~0.7 pg/mL), mouse monoclonal anti-TIMP-1 labeled with biotin (~3.6 pg/mL) in buffer.

The solid phase is a streptavidin-coated paramagnetic microparticles (∼0.5 mg/mL-0.7 mg/mL) in buffer.

The following test program was used:

| **Assay Program** | | | | | |
|---|---|---|---|---|---|
| | **Sample Volume (µL)** | **First Dispense (µL)** | **Incubation Time (minutes)** | **Second Dispense (µL)** | **Incubation Time (minutes)** |
| PIIINP | 20 µL | 100 µL of Ancillary Well Reagent and 300 µL of Solid Phase Reagent | 2.75 minutes | 100 µL of Lite Reagent | 5 minutes |

The experiment was performed with the following samples and detection molecules:

| **Sample** | **425 nm (PIIINP)** | **500 nm** | **525 nm (TIMP1)** | **550 nm** |
|---|---|---|---|---|
| PBS | 3119±340 | 686±56 | 509±101 | 407±216 |
| ELF QC1 | 6201±485 | 6563±296 | 6861±452 | 4155±321 |
| ELF QC2 | 17189±753 | 17912±1719 | 19022±2188 | 11936±1045 |
| ELF QC3 | 32233±302 | 29775±3505 | 32412±2857 | 20950±2039 |

## Claims

1. A multiplexing detection device comprising an optical filter, a high sensitivity optical detector, a collimating lens, a terminal mirror, a cuvette holder designed to hold a cuvette, wherein said cuvette is a reaction vessel for a non-excited chemiluminescence reaction emitting photons which are collected, transmitted through the optical filter and detected by the high sensitivity optical detector; and a synchronization module, which is designed to synchronize the operation of the optical detector and initiation of the chemiluminescence reaction.

2. The detection device of claim 1, wherein the optical filters are arranged in a filter wheel, wherein the filter wheel preferably comprises 2 to 6 optical filters, which are arranged in a circular or semicircular manner in the wheel.

3. The detection device of claim 2, wherein the filter wheel rotates in the device with a velocity of 30 to 50 ms per revolution, preferably with a velocity of 33 ms or 48 ms per revolution.

4. The detection device of any one of claims 1 to 3, wherein the optical filters have a transmission wavelength of 400 nm to 700 nm, preferably a wavelength of 425 nm, 475 nm, 525 nm, 625 nm or 700 nm.

5. The detection device of any one of claims 1 to 4, wherein the cuvette holder is a carousel holder accommodating 1 to 15 cuvettes.

6. The detection device of any one of claims 1 to 5, wherein the high sensitivity optical detector is a photomultiplier tube (PMT) or a single-photon avalanche diodes (SPAD), preferably an array of SPADs.

7. The detection device of claim 6, wherein the optical filters are arranged on the surface of the SPAD, preferably comprising 2 to 6 optical filters, which are arranged in a circular or quadratic manner.

8. The device of any one of claims 1 to 7, wherein the device additionally comprises a precision pump which translocates to the cuvette a starting solution which initiates the chemiluminescence reaction emitting photons.

9. The device of claim 8, wherein the synchronization module synchronizes the operation of the precision pump and data acquisition by the high sensitivity optical detector.

10. A method for detecting a molecular interaction between at least one target molecule and an interactor molecule comprising the steps:
(i) providing the target molecule in an aqueous solution;
(ii) interacting the target molecule with at least one first interactor molecule, wherein the interaction yields a complex comprising both the target molecule and the first interactor;
(iii) identifying the complex of step (ii) with a second interactor linked to a chemiluminescent dye, wherein the identification results in a chemiluminescent emission of photons; and
(iv) detecting the emission of photons with the device of any one of claims 1 to 9.

11. The method of claim 10, wherein the target molecule is a nucleic acid, a protein or a small organic molecule.

12. The method of claim 10 or 11, wherein the interactor is a hybridizing nucleic acid; a binding protein, preferably an antibody; or a small organic molecule.

13. The method of any one of claims 10 to 12, wherein the method additionally comprises a step of retaining the complex of step (ii) via a further interaction with a third interactor which is present at a substrate, preferably as a biotin-streptavidin interaction; or wherein the first interactor is immobilized at a substrate ab initio.

14. The method of any one of claim 10 to 13, wherein steps (ii) and (iii) are performed simultaneously or sequentially, optionally followed by a washing and/or incubation step.

15. The method of any one of claims 10 to 14, wherein said chemiluminescent dye is an acridinium ester, preferably NSP-DMAE, HQYAE, TSPAE, NSP-LEZAE, Rhodamine-2-AM-DMAE or CNF-2-AM-DMAE.

16. The method of claim 15, wherein the method is performed as multiplex detection using at least 3 acridinium esters, wherein the acridinium ester is preferably selected from NSP-DMAE, HQYAE, TSPAE, NSP-LEZAE, Rhodamine-2-AM-DMAE or CNF-2-AM-DMAE.

17. The method of claim 16, wherein the target molecule is one or more different miRNA molecules, the first interactor is one or more corresponding hybridizing biotinylated DNA catcher molecules, the second interactor is one or more acridinium ester-labeled complex-specific antibody and the third interactor is a streptavidin coupled to a substrate, wherein for each target molecule of interest a corresponding hybridizing first interactor and a corresponding complex-specific antibody coupled to a different acridinium ester is used.

18. The method of claim 16, wherein the target molecule is one or more different miRNA molecules, the first interactor is one or more corresponding hybridizing DNA catcher molecules linked to an acridinium ester, and the second interactor is one or more complex-specific antibodies, wherein for each target molecule of interest a corresponding hybridizing first interactor and a corresponding complex-specific antibody coupled to a different acridinium ester is used.

19. Use of the device of any one of claims 1 to 9 for a multiplex detection of a molecular interaction between at least one target molecule and an interactor molecule.

20. A system for multiplex detection of a molecular interaction between at least one target molecule and an interactor molecule comprising the detection device of any one of claims 1 to 9 and a cuvette, wherein the cuvette comprises all ingredients required for the performance of the method of any one of claims 10 to 18.
